# EUROPEAN PATENT SPECIFICATION

(11) **EP 2 493 254 B1**
(45) Date of publication and mention of the grant of the patent: **10.06.2015**
(21) Application number: 09850500.1
(22) Date of filing: 20.10.2009
(51) Int. Cl.: H04W 72/00, H04W 56/00

(54) **METHOD, BASE STATION AND SYSTEM FOR PERFORMING TIMING-ADJUSTMENT ON COMPONENT CARRIERS**
VERFAHREN, BASISSTATION UND SYSTEM ZUR DURCHFÜHRUNG EINER ZEITSTEUERUNGSEINSTELLUNG AN KOMPONENTENTRÄGERN
PROCÉDÉ, STATION DE BASE ET SYSTÈME PERMETTANT D'EFFECTUER UN RÉGLAGE DE SYNCHRONISATION SUR DES PORTEUSES DE COMPOSANTES

(43) Date of publication of application: 29.08.2012
(73) Proprietor: Huawei Technologies Co., Ltd., Longgang District Shenzhen, Guangdong 518129 (CN)
(72) Inventor: LI, Yajuan, Shenzhen Guangdong 518129 (CN); CHANG, Junren, Shenzhen Guangdong 518129 (CN); WU, Yuchun, Shenzhen Guangdong 518129 (CN)
(74) Representative: Thun, Clemens
(86) International application number: PCT/CN2009/074520
(87) International publication number: WO 2011/047504

(56) References cited:
- CN-A- 1 466 285
- CN-A- 101 505 538
- CN-A- 101 540 978
- HUAWEI: "Different Timing Advance Impact on Carrier Aggregation", 3GPP DRAFT; R2-095815 DIFFERENT TIMING ADVANCE IMPACT ON CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390299, [retrieved on 2009-10-06]
- [TSG RAN WG1] CATT: "[Draft] Reply LS on carrier aggregation design", 3GPP DRAFT; R1-092768, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050351224, [retrieved on 2009-06-24]
- HUAWEI: "Issues in carrier aggregation", 3GPP DRAFT; R1-092377, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050350895, [retrieved on 2009-06-24]
- NOKIA SIEMENS NETWORKS ET AL: "Carrier Aggregation and Timing Advance", 3GPP DRAFT; R2-095519 CARRIER AGGREGATION & TIMING ADVANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390061, [retrieved on 2009-10-05]
- ERICSSON: "Impact of Carrier Aggregation on the L2 protocol architecture for LTE Rel-10", 3GPP DRAFT; R2-092957 L2 PROTOCOL ARCHITECTURE FOR LTE REL-10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340752, [retrieved on 2009-04-28]

## Description

### FIELD OF THE INVENTION

The present invention relates to the communications field, and in particular, to a method, an eNodeB, and a system for timing adjustment to a component carrier after carrier aggregation.

### BACKGROUND OF THE INVENTION

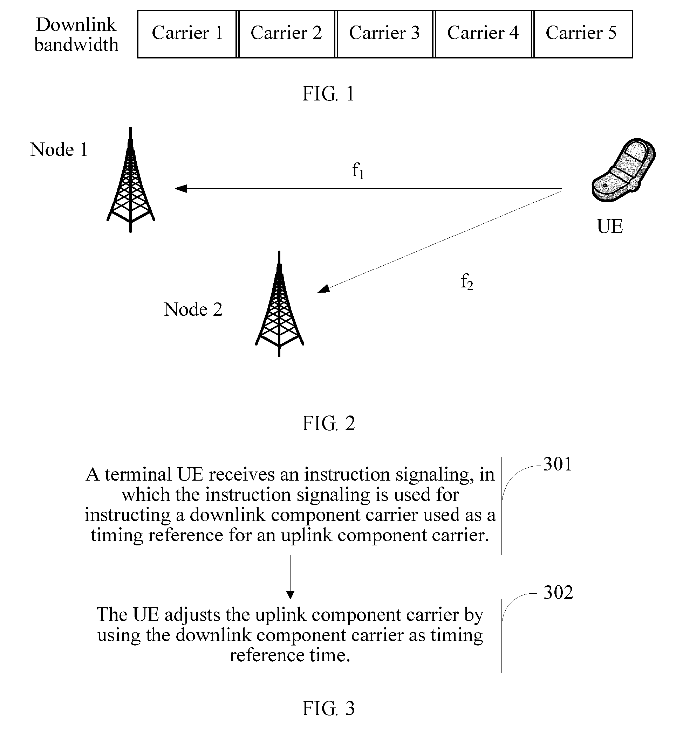

To meet the rapidly developing communications demands, the 3GPP LTE-Advanced system is ready to use the carrier aggregation technology as the method for expanding system bandwidth. Carrier aggregation mainly aggregates multiple component carriers into a carrier higher than 20M to support a high data transmission rate. As shown by the schematic diagram of the carrier aggregation in FIG 1, the downlink bandwidth is aggregated by five 20-M carriers.

After the carrier aggregation, it is found that in some scenarios, multiple component carriers used by a terminal UE cannot use the same timing adjustment (TA) reference time. As shown in FIG 2, the terminal UE communicates with two access points by using two different component carriers. Two remote antennas or distributed antennas are arranged for two nodes, respectively. The UE uses two different component carriers to communicate with the two nodes. In the above scenario, although being timing aligned during transmission at the eNodeB, different downlink component carriers reach the same UE at different time due to different propagation environments, so that the uplink component carriers have different TA reference time. However, in some other operational environments, different uplink component carriers might also have different TA reference time.

In the LTE R8 system in the prior art, the eNodeB only needs to send the offset amount of uplink timing adjustment to the UE. As the LTE R8 system only has a pair of uplink and downlink component carriers, a downlink timing reference carrier is very clear and the UE may perform TA adjustment based on the unique downlink carrier without clarifying other information. However, as multiple downlink component carriers exist in the LTE-A system and the downlink component carriers might reach the UE at different time, the TA adjustment of the uplink carrier cannot be accurately confirmed by using the prior art.

Huawei: "Different Timing Advance Impact on Carrier Aggregation", 3GPP Draft; R2-095815; XP050390299, describes an uplink time alignment in which a separate timing advance command for each component carrier is needed for maintaining time alignment, wherein a modification of this uplink time alignment in that the same timing advance can be used on one group of component carriers is proposed.

### SUMMARY OF THE INVENTION

Embodiments of the present invention provide a method, an eNodeB, and a system for timing adjustment to a component carrier.

An embodiment of the present invention provides a method for timing adjustment to a component carrier, which includes the following steps:
receiving an instruction signaling, in which the instruction signaling is used for instructing a downlink component carrier used as a timing reference for an uplink component carrier; and
adjusting the uplink component carrier by using timing information of the downlink component carrier as the timing reference
wherein the downlink component carrier used as a timing reference is used in the process of the initial random access channel.

An embodiment of the present invention further provides a terminal for timing adjustment to a component carrier, which includes:
means for receiving an instruction signaling, wherein the instruction signaling is used for instructing a downlink component carrier used as a timing reference for an uplink component carrier; and
means for adjusting the uplink component carrier by using the downlink component carrier as timing reference time,
wherein the downlink component carrier used as a timing reference is used in the process of the initial random access channel.

An embodiment of the present invention further provides an eNodeB, configured to communicate with a terminal by using at least two component carriers after carrier aggregation, which includes: an instruction signaling sending device, configured to send an instruction signaling, in which the instruction signaling is used for instructing timing information of a downlink component carrier used as a timing reference for an uplink component carrier and
wherein the downlink component carrier used as a timing reference is used in the process of the initial random access channel.

In the embodiments of the present invention, the downlink component carrier used as the timing reference for the uplink component carrier is instructed in the sent instruction signaling. The timing reference time used by the terminal during the TA adjustment of the uplink component carrier may be clarified and the TA adjustment of the uplink component carrier may be accurately confirmed.

### BRIEF DESCRIPTION OF THE DRAWING

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons skilled in the art may derive other drawings from the accompanying drawings without creative efforts.
FIG 1 is a schematic diagram of carrier aggregation in the prior art;
FIG 2 is a schematic diagram illustrating the process that a terminal communicates with two access points by using two different component carriers in the prior art;
FIG 3 is a flow chart of a method for timing adjustment to a component carrier after carrier aggregation according to an embodiment of the present invention;
FIG 4 is a schematic diagram of a downlink component carrier in a group in which the timing reference is specified for an uplink component carrier according to an embodiment of the present invention;
FIG 5 is a schematic diagram of an eNodeB according to an embodiment of the present invention; and
FIG 6 is a schematic diagram of a system for timing adjustment to a component carrier after carrier aggregation according to an embodiment of the present invention.

### DETAILED DESCRIPTION OF THE EMBODIMENTS

The technical solutions of the present invention are clearly described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

Referring to FIG 3, an embodiment of the present invention provides a method for timing adjustment to a component carrier after carrier aggregation, which includes the following steps:
Step 301: A terminal UE receives an instruction signaling, in which the instruction signaling is used for instructing a downlink component carrier used as a timing reference for an uplink component carrier.
Step 302: The UE adjusts the uplink component carrier by using the timing information of the downlink component carrier as timing reference time.

Through step 301 and step 302, the timing reference time used during the TA adjustment of the uplink component carrier by the UE may be clarified and the TA adjustment of the uplink component carrier is accurately confirmed.

Optionally, in step 301, the instruction signaling is used for selecting different downlink component carriers as the timing reference for the uplink component carrier according to the instruction of a preset rule and/or an external command, so that the UE performs the TA adjustment on the uplink component carrier more flexibly to meet specific demands.

The preset rule may include using the timing information of the downlink component carrier as the timing reference time for the TA of all the uplink component carriers, in which the downlink component carrier is used in the process that the UE randomly accesses RACH (Random Access Channel) initially. The preset rule may also be that the UE, during TA adjustment of an uplink component carrier, uses the downlink component carrier to which a serving cell or a primary serving cell (a serving cell, primary serving cell or special cell) belongs as the timing reference point. The preset rule may also be that an uplink component carrier and a downlink component carrier that have the same propagation environment (for example, being forwarded to the UE via the same node) are regarded as a group of component carriers. In this manner, the UE uses the timing information of the downlink component carrier as the timing reference time for the TA of all the uplink carriers in the component carrier (component carrier, CC) group, in which the downlink component carrier is used in the process that the UE randomly accesses RACH in each component carrier group. The preset rule may also be that the eNodeB broadcasts, in a system broadcast message, the downlink timing reference component carrier corresponding to TA adjustment of each uplink carrier, or broadcasts, in a system broadcast message, the downlink timing reference carrier of an uplink carrier in each carrier group with the same TA timing reference time. Of course, the instruction signaling may also be further adjusted flexibly in combination with an external command or separately according to an external command. Specifically, the external command may vary based on special application scenarios.

In the preset rule in this embodiment, the downlink component carrier is used as timing reference time to adjust all the uplink component carriers, and, for different CC groups, the downlink component carrier in a group may also specified as the timing reference of all uplink component carriers in the group according to CC grouping information.

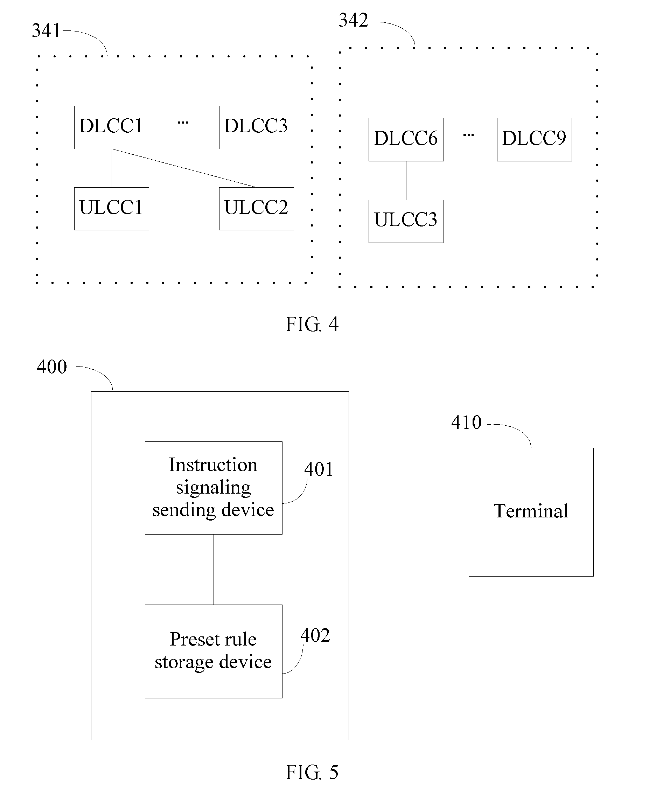

Refer to FIG 4, a schematic diagram of specifying the downlink component carrier in the group as the timing reference of the uplink component carrier for different CC groups according to the grouping information. In the CC group 341, the downlink component carrier DLCC1 in the group is specified as the timing reference of both the uplink component carriers ULCC1 and ULCC2 in the group. In the CC group 342, the downlink component carrier DLCC6 in the group is specified as the timing reference of the uplink component carrier ULCC3 in the group. The following illustration is given by taking the example in which the instruction signaling is borne by the radio resource control RRC (Radio Resource Control) configuration information. It may be understood that the timing reference downlink component carrier for the TA adjustment of each uplink carrier may be clearly specified in an RRC configuration message. The following illustration is given by taking an example in which the first CC group or the second CC group represents a certain specific application scenario. It may be understood that illustration of the first and second here is only for differentiation and conveys no special physical meaning.

If both an uplink component carrier and the downlink component carrier exist in the first CC group, the timing of the uplink component carrier refers to the downlink component carrier in the CC group as much as possible. The timing reference downlink component carrier may be a downlink component carrier that the eNodeB specifies in the first CC group, and may also be any downlink component carrier that the eNodeB and the UE default in the first CC group.

If the downlink component carrier in the second CC group is reconfigured, and the downlink component carrier just used as the uplink timing reference is released or replaced, the eNodeB may specify a new timing reference carrier, and also the UE may automatically switch to another downlink component carrier in the same CC group.

If in the first CC group or the second CC group, no downlink component carrier may be used as the timing reference for the uplink component carrier, the eNodeB shall specify another downlink component carrier as the uplink timing reference carrier.

When no downlink component carrier exists in a CC group, the eNodeB has to specify a downlink component carrier as the timing reference carrier for all the uplink carriers in the group, or may default that the downlink component carrier to which the primary serving cell belongs is used as the timing reference carrier.

When an uplink component carrier is added in an eNodeB, the downlink timing reference carrier for the TA adjustment may be specified, and also it may be defaulted that the TA adjustment of the uplink component carrier refers to the downlink timing reference carrier for other uplink component carriers in the CC group that are the same as the uplink component carrier.

If the system confirms that only a downlink component carrier is used as the timing reference point for all the uplink carriers, the downlink component carrier to which the primary serving cell belongs should be used. The eNodeB may confirm the timing reference downlink carrier for the uplink carrier through a system message or RRC signaling or a MAC control message.

The instruction signaling may also be borne by a broadcast message sent by the eNodeB. The downlink component carrier is used as the timing reference time to adjust the uplink component carrier. It may be understood that a message for instructing pairing or grouping of an uplink component carrier and the downlink component carrier is added in the system broadcast message. Such pairing or grouping information may be used as the timing reference downlink component carrier for the TA adjustment, and may also be used for other purposes such as random access RACH. Optionally, for the specific grouping method, reference may also be made to FIG 4.

Optionally, according to the instruction of a preset rule and/or an external command, the same downlink component carrier or different downlink component carriers are selected as the timing reference of the uplink component carrier, and the downlink component carrier is used as the timing reference time to adjust the uplink component carrier. If the downlink component carrier selected is released or replaced through a reconfiguration process, a reestablishment process or in other manners, another downlink component carrier as the timing reference needs to be reselected to adjust the corresponding uplink component carrier. It may be understood that the reselection here may be performed according to the preset rule in this embodiment.

Of course, when the downlink component carrier selected is replaced through a reconfiguration process, the eNodeB may instruct the UE to use other carriers as new timing reference time in a reconfiguration message. Also, the downlink component carrier as the timing reference may also be equivalently replaced according to the CC grouping information. For example, as shown in FIG 4, it is assumed that in the CC group 341 having the same propagation environment, currently the uplink TA of the ULCC1 and ULCC2 refer to the DLCC1, and when the DLCC1 no longer serves the UE, the UE and the eNodeB may use the DLCC3 in the same CC group as synchronous reference time at the same time to continue keeping the existing uplink synchronization. If at this time no downlink component carrier exists in a CC group, a RACH process needs to be performed again for the uplink component carrier in the CC group to confirm new timing reference time. In this case, the eNodeB may clearly specify the downlink component carrier as the timing reference in signaling such as the reconfiguration message. The UE may also send a request message to the eNodeB initiatively. The request message is used for requesting to acquire a re-specified downlink component carrier as the timing reference.

Referring to FIG 5, an embodiment of the present invention further provides an eNodeB 400. The eNodeB is configured to communicate with a terminal 410 via at least two component carriers after carrier aggregation. The eNodeB 400 includes: an instruction signaling sending device 401, configured to send an instruction signaling to the terminal 410, in which the instruction signaling is used for instructing a downlink component carrier used as a timing reference for an uplink component carrier. Further, the timing reference time used by the terminal 410 in the TA adjustment of the uplink component carrier is clarified.

Optionally, the eNodeB 400 may further include: a preset rule storage device 402, configured to select the downlink component carrier used in the process of the initial random access channel RACH (Random Access Channel) as the downlink component carrier selected. The instruction signaling sending device 401 sends the instruction signaling according to the downlink component carrier selected by the preset rule storage device 402. It may be understood that for the manner that the preset rule storage device 402 selects the downlink component carrier, reference may be made to the preset rule in the method embodiments of the present invention. The preset rule storage device may select different downlink component carriers used as the timing reference for the uplink component carrier according to the instruction of different preset rules and/or external commands. Therefore, the flexibility of the timing reference time used by the terminal 410 during TA adjustment of the uplink component carrier is increased.

Similarly, the instruction signaling may also be borne by the radio resource control RRC (Radio Resource Control) configuration information. The downlink configuration carrier is used as the timing reference time to adjust the timing of all the uplink component carriers, and the downlink component carrier in the group as the timing reference of all the uplink component carriers in the group may also be specified for different CC groups according to the CC grouping information, and for details, reference may be made to FIG 4.

The instruction signaling may also be borne by a broadcast message sent by the eNodeB 410. The downlink component carrier is used as the timing reference time to adjust the uplink component carrier. It may be understood that a message for instructing pairing or grouping of an uplink component carrier and a downlink component carrier is added in the system broadcast message. Such pairing or grouping information may be used as the timing reference downlink component carrier for the TA adjustment, and may also be used for other purposes such as random access RACH.

Optionally, according to the instruction of the preset rule and/or external command, different downlink component carriers are selected as the timing reference of uplink component carriers, and the downlink component carrier is used as the timing reference time to adjust the uplink component carrier. If the downlink component carrier selected is replaced through a reconfiguration process, a reestablishment process or in other manners, another downlink component carrier as the timing reference is reselected to adjust the corresponding uplink component carrier. It may be understood that the reselection here may be performed according to the preset rule in the method embodiments of the specification of the present application, which is not described here again.

Of course, when the downlink component carrier selected is replaced through a reconfiguration process, the eNodeB 400 may instruct the UE to use other carriers as new timing reference time in the same message, such as the reconfiguration message. Optionally, the eNodeB 400 receives a request message sent to the eNodeB 400 by the terminal 410. The request message is used for requesting to acquire a re-specified downlink component carrier as the timing reference.

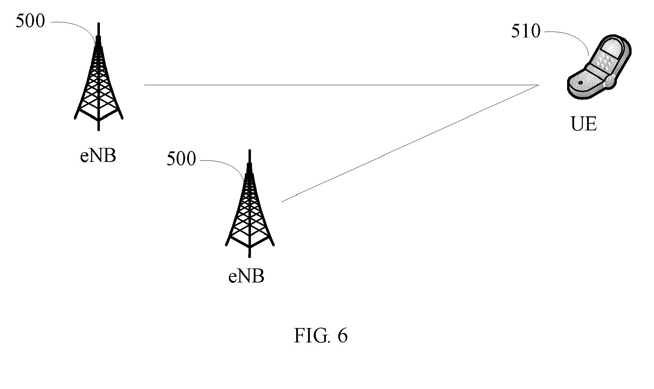

Referring to FIG 6, an embodiment of the present invention further provides a system for timing adjustment to a component carrier after carrier aggregation, which includes an eNodeB 500 and a terminal 510.

The eNodeB 500 is configured to send an instruction signaling, in which the instruction signaling is used for instructing a downlink component carrier used as a timing reference for an uplink component carrier.

The terminal 510 is configured to, according to the instruction signaling, adjust the uplink component carrier by using the downlink component carrier as the timing reference time.

Optionally, the downlink component carrier in the system embodiment is the downlink component carrier that is selected by the eNodeB 500 and used in the process of the initial random access channel RACH (Random Access Channel). The downlink component carrier is used as the timing reference time to adjust all the uplink component carriers.

Of course, the eNodeB 500 in the system embodiment may have the same function as the eNodeB 400 in FIG 5 and the terminal 510 in the system embodiment may have the same functions as the terminal 410 in FIG 5, which are not described here again.

The optional terminal 510 adjusts all the uplink component carriers or a part of the uplink component carriers by using the downlink component carrier as the timing reference time. Of course, when the downlink component carrier selected is replaced through a reconfiguration process, the terminal 510 sends a request message to the eNodeB 500. The request message is used for requesting to acquire a re-specified downlink component carrier as the timing reference. Alternatively, the system directly carries a redesigned timing reference downlink carrier when sending a message such as the reconfiguration message.

In conclusion, it can be seen that the method, eNodeB, and system in the specification clarifies a pairing relationship between an uplink component carrier and the downlink component carrier. The pairing is that the TA adjustment of the uplink component carrier refers to a paired downlink component carrier. Optionally, each terminal UE may adjust all the uplink carriers by using the downlink component carrier used in the initial RACH process as the timing reference time, or use the carrier or primary carrier to which the primary serving cell belongs as the timing reference time to adjust all the uplink carriers, or adjust the uplink carriers in other manners. When the timing reference downlink component carrier of the terminal is replaced through a reconfiguration process, the UE needs to reselect a downlink component carrier as the timing reference to adjust all the uplink carriers, and also the eNB may re-specify a downlink component carrier as the timing reference. When the eNB performs carrier reconfiguration on the UE, the timing reference carrier of the UE is kept as much as possible or a downlink component carrier in the same CC group is kept as much as possible. Furthermore, the timing reference time used in the TA adjustment of the uplink component carrier by the UE can be clarified and the TA adjustment of the uplink component carrier can be accurately confirmed, so that the TA adjustment of the uplink component carrier by the UE is more flexible and meets specific demands.

Persons skilled in the art should understand that, all or a part of processes in the method according to the embodiments may be accomplished by relevant hardware under instructions of a computer program. The program may be stored in a computer-readable storage medium. When the program is executed, the process of the method according to the embodiments of the present invention is performed. The storage medium may be a magnetic disk, an optical disk, a Read-Only Memory (ROM), or a Random Access Memory (RAM).

The above descriptions are merely exemplary embodiments of the present invention. It should be noted by persons skilled in the art that modifications and improvements may be made without departing from the principle of the present invention, which should be construed as falling within the protection scope of the present invention.

## Claims

1. A method for timing adjustment to a component carrier, comprising:
receiving (301) an instruction signaling, wherein the instruction signaling is used for instructing a downlink component carrier (DLCC1) used as a timing reference for an uplink component carrier (ULCC1, ULCC2) ; and
adjusting (302) the uplink component carrier by using the downlink component carrier as timing reference time,
wherein the downlink component carrier used as a timing reference is used in the process of the initial random access channel.

2. The method according to claim 1, wherein the instruction signaling is used for selecting the downlink component carrier (DLCC1) as the timing reference for the uplink component carrier according to the instruction of an external command.

3. The method according to claim 2, wherein the instruction signaling is borne by radio resource control RRC configuration information.

4. The method according to claim 2, wherein the instruction signaling is borne by a broadcast message sent by a system.

5. The method according to claim 2, wherein the downlink component carrier (DLCC1) as the timing reference time is used to adjust all uplink component carriers.

6. The method according to claim 1, wherein when the downlink component carrier selected is replaced through a reconfiguration process, reselecting another downlink component carrier (DLCC3) as the timing reference to adjust all uplink component carriers.

7. The method according to claim 1, wherein when the downlink component carrier selected is replaced through a reconfiguration process, sending a request message, wherein the request message is used for requesting to acquire a re-specified downlink component carrier as the timing reference.

8. A terminal (410) for timing adjustment to a component carrier, comprising:
means for receiving (301) an instruction signaling, wherein the instruction signaling is used for instructing a downlink component carrier (DLCC1) used as a timing reference for an uplink component carrier (ULCC1, ULCC2); and
means for adjusting (302) the uplink component carrier by using the downlink component carrier as timing reference time,
wherein the downlink component carrier used as a timing reference is used in the process of the initial random access channel.

9. The terminal (410) according to claim 8, wherein the instruction signaling is used for selecting the downlink component carrier (DLCC1) as the timing reference for the uplink component carrier according to the instruction of an external command.

10. The terminal (410) according to claim 9, wherein the instruction signaling is borne by radio resource control RRC configuration information.

11. The terminal (410) according to claim 9, wherein the instruction signaling is borne by a broadcast message sent by a system.

12. The terminal (410) according to claim 9, wherein the downlink component carrier (DLCC1) as the timing reference time is used to adjust all uplink component carriers.

13. The terminal (410) according to claim 8, wherein the terminal further comprises:
means for reselecting another downlink component carrier (DLCC3) as the timing reference to adjust all uplink component carriers when the downlink component carrier selected is replaced through a reconfiguration process.

14. The terminal (410) according to claim 8, wherein the terminal further comprises:
means for sending a request message when the downlink component carrier selected is replaced through a reconfiguration process, wherein the request message is used for requesting to acquire a re-specified downlink component carrier as the timing reference.

15. An eNodeB (400), configured to communicate with a terminal (410) by using at least two component carriers after carrier aggregation, comprising: an instruction signaling sending device (401), configured to send an instruction signaling, wherein the instruction signaling is used for instructing a downlink component carrier (DLCC1) used as a timing reference for an uplink component carrier (ULCC1, ULCC2) and
wherein the downlink component carrier used as a timing reference is used in the process of the initial random access channel.

## Patentansprüche

1. Verfahren zur Zeitsteuerungseinstellung an einem Komponententräger, umfassend:
Empfangen (301) einer Anweisungssignalisierung, wobei die Anweisungssignalisierung dazu dient, einen Abwärtsstrecken-Komponententräger (Downlink Component Carrier, DLCC1) anzuweisen, der als Zeitsteuerungsreferenz für einen Aufwärtsstrecken-Komponententräger (Uplink Component Carrier, ULCC1, ULCC2) dient; und
Einstellen (302) des Aufwärtsstrecken-Komponententrägers, indem der Abwärtsstrecken-Komponententräger als Zeitsteuerungsreferenz verwendet wird,
wobei der Abwärtsstrecken-Komponententräger, der als Zeitsteuerungsreferenz verwendet wird, in dem Verfahren des anfänglichen Direktzugriffskanals genutzt wird.

2. Verfahren gemäß Anspruch 1, wobei die Anweisungssignalisierung dazu dient, den Abwärtsstrecken-Komponententräger (DLCC1) als Zeitsteuerungsreferenz für den Aufwärtsstrecken-Komponententräger gemäß der Anweisung eines externen Befehls auszuwählen.

3. Verfahren gemäß Anspruch 2, wobei die Anweisungssignalisierung mittels Funkressourcensteuerungs (Radio Resource Control, RRC) - Konfigurationsinformationen übertragen wird.

4. Verfahren gemäß Anspruch 2, wobei die Anweisungssignalisierung in einer Rundsendenachricht übertragen wird, die von einem System gesendet wird.

5. Verfahren gemäß Anspruch 2, wobei der Abwärtsstrecken-Komponententräger (DLCC1) als Zeitsteuerungsreferenz verwendet wird, um alle Aufwärtsstrecken-Komponententräger einzustellen.

6. Verfahren gemäß Anspruch 1, wobei, wenn der ausgewählte Abwärtsstrecken-Komponententräger durch einen Neukonfigurationsprozess ausgetauscht wird, ein anderer Abwärtsstrecken-Komponententräger (DLCC3) als Zeitsteuerungsreferenz ausgewählt wird, um alle Aufwärtsstrecken-Komponententräger einzustellen.

7. Verfahren gemäß Anspruch 1, wobei, wenn der ausgewählte Abwärtsstrecken-Komponententräger durch einen Neukonfigurationsprozess ausgetauscht wird, eine Anforderungsnachricht gesendet wird, wobei die Anforderungsnachricht dazu dient, einen neu spezifizierten Abwärtsstrecken-Komponententräger als Zeitsteuerungsreferenz anzufordern.

8. Endgerät (410) für die Zeitsteuerungseinstellung an einem Komponententräger, umfassend:
Mittel zum Empfangen (301) einer Anweisungssignalisierung, wobei die Anweisungssignalisierung dazu dient, einen Abwärtsstrecken-Komponententräger (DLCC1) anzuweisen, der als Zeitsteuerungsreferenz für einen Aufwärtsstrecken-Komponententräger (ULCC1, ULCC2) verwendet wird; und
Mittel zum Einstellen (302) des Aufwärtsstrecken-Komponententrägers, indem der Abwärtsstrecken-Komponententräger als Zeitsteuerungsreferenz verwendet wird,
wobei der Abwärtsstrecken-Komponententräger, der als Zeitsteuerungsreferenz verwendet wird, in dem Verfahren des anfänglichen Direktzugriffskanals genutzt wird.

9. Endgerät (410) gemäß Anspruch 8, wobei die Anweisungssignalisierung dazu dient, den Abwärtsstrecken-Komponententräger (DLCC1) als Zeitsteuerungsreferenz für den Aufwärtsstrecken-Komponententräger gemäß der Anweisung eines externen Befehls auszuwählen.

10. Endgerät (410) gemäß Anspruch 9, wobei die Anweisungssignalisierung mittels Funkressourcensteuerungs (RRC) -Konfigurationsinformationen übertragen wird.

11. Endgerät (410) gemäß Anspruch 9, wobei die Anweisungssignalisierung in einer Rundsendenachricht übertragen wird, die von einem System gesendet wird.

12. Endgerät (410) gemäß Anspruch 9, wobei der Abwärtsstrecken-Komponententräger (DLCC1) als Zeitsteuerungsreferenz verwendet wird, um alle Aufwärtsstrecken-Komponententräger einzustellen.

13. Endgerät (410) gemäß Anspruch 8, wobei das Endgerät ferner umfasst:
Mittel, um einen anderen Abwärtsstrecken-Komponententräger (DLCC3) als Zeitsteuerungsreferenz auszuwählen, um alle Aufwärtsstrecken-Komponententräger einzustellen, wenn der ausgewählte Abwärtsstrecken-Komponententräger durch einen Neukonfigurationsprozess ausgetauscht wird.

14. Endgerät (410) gemäß Anspruch 8, wobei das Endgerät ferner umfasst:
Mittel, um eine Anforderungsnachricht zu senden, wenn der ausgewählte Abwärtsstrecken-Komponententräger durch einen Neukonfigurationsprozess ausgetauscht wird, wobei die Anforderungsnachricht dazu dient, einen neu spezifizierten Abwärtsstrecken-Komponententräger als Zeitsteuerungsreferenz anzufordern.

15. eNodeB (400), der dafür ausgelegt ist, mit einem Endgerät (410) zu kommunizieren, wozu mindestens zwei Komponententräger nach der Trägeraggregation verwendet werden, umfassend: eine Sendeeinheit für Anweisungssignalisierung (401), die dafür ausgelegt ist, eine Anweisungssignalisierung zu senden, wobei die Anweisungssignalisierung dazu dient, einen Abwärtsstrecken-Komponententräger (DLCC1) anzuweisen, der als Zeitsteuerungsreferenz für einen Aufwärtsstrecken-Komponententräger (ULCC1, ULCC2) verwendet wird, und
wobei der Abwärtsstrecken-Komponententräger, der als Zeitsteuerungsreferenz verwendet wird, in dem Verfahren des anfänglichen Direktzugriffskanals genutzt wird.

## Revendications

1. Procédé de réglage de cadencement d'une porteuse constituante, comprenant :
la réception (301) d'une signalisation d'instruction, la signalisation d'instruction étant utilisée pour instruire une porteuse constituante de liaison descendante (DLCC1) utilisée comme référence de cadencement pour une porteuse constituante de liaison montante (ULCC1, ULCC2) ; et
le réglage (302) de la porteuse constituante de liaison montante en utilisant la porteuse constituante de liaison descendante comme temps de référence de cadencement,
dans lequel la porteuse constituante de liaison descendante utilisée comme référence de cadencement est utilisée dans le processus du canal d'accès aléatoire initial.

2. Procédé selon la revendication 1, dans lequel la signalisation d'instruction est utilisée pour sélectionner la porteuse constituante de liaison descendante (DLCC1) comme référence de cadencement pour la porteuse constituante de liaison montante en fonction de l'instruction d'une commande externe.

3. Procédé selon la revendication 2, dans lequel la signalisation d'instruction est portée par des informations de configuration de commande de ressources radio RRC.

4. Procédé selon la revendication 2, dans lequel la signalisation d'instruction est portée par un message de diffusion envoyé par un système.

5. Procédé selon la revendication 2, dans lequel la porteuse constituante de liaison descendante (DLCC1) comme temps de référence de cadencement est utilisée pour régler toutes les porteuses constituantes de liaison montante.

6. Procédé selon la revendication 1, comprenant, quand la porteuse constituante de liaison descendante sélectionnée est remplacée par le biais d'un processus de configuration, la resélection d'une autre porteuse constituante de liaison descendante (DLCC3) comme référence de cadencement pour régler toutes les porteuses constituantes de liaison montante.

7. Procédé selon la revendication 1, comprenant, quand la porteuse constituante de liaison descendante sélectionnée est remplacée par le biais d'un processus de reconfiguration, l'envoi d'un message de requête, le message de requête étant utilisé pour demander l'acquisition d'une porteuse constituante de liaison descendante respécifiée comme référence de cadencement.

8. Terminal (410) de réglage de cadencement d'une porteuse constituante, comprenant :
un moyen de réception (301) d'une signalisation d'instruction, la signalisation d'instruction étant utilisée pour instruire une porteuse constituante de liaison descendante (DLCC1) utilisée comme référence de cadencement pour une porteuse constituante de liaison montante (ULCC1, ULCC2) ; et
un moyen de réglage (302) de la porteuse constituante de liaison montante en utilisant la porteuse constituante de liaison descendante comme temps de référence de cadencement,
dans lequel la porteuse constituante de liaison descendante utilisée comme référence de cadencement est utilisée dans le processus du canal d'accès aléatoire initial.

9. Terminal (410) selon la revendication 8, dans lequel la signalisation d'instruction est utilisée pour sélectionner la porteuse constituante de liaison descendante (DLCC1) comme référence de cadencement pour la porteuse constituante de liaison montante en fonction de l'instruction d'une commande externe.

10. Terminal (410) selon la revendication 9, dans lequel la signalisation d'instruction est portée par des informations de configuration de commande de ressources radio RRC.

11. Terminal (410) selon la revendication 9, dans lequel la signalisation d'instruction est portée par un message de diffusion envoyé par un système.

12. Terminal (410) selon la revendication 9, dans lequel la porteuse constituante de liaison descendante (DLCC1) comme temps de référence de cadencement est utilisée pour régler toutes les porteuses constituantes de liaison montante.

13. Terminal (410) selon la revendication 8, le terminal comprenant en outre :
un moyen de resélection d'une autre porteuse constituante de liaison descendante (DLCC3) comme référence de cadencement pour régler toutes les porteuses constituantes de liaison montante quand la porteuse constituante de liaison descendante sélectionnée est remplacée par le biais d'un processus de reconfiguration.

14. Terminal (410) selon la revendication 8, le terminal comprenant en outre :
un moyen d'envoi d'un message de requête quand la porteuse constituante de liaison descendante sélectionnée est remplacée par le biais d'un processus de reconfiguration, le message de requête étant utilisé pour demander l'acquisition d'une porteuse constituante de liaison descendante respécifiée comme référence de cadencement.

15. eNodeB (400), configuré pour communiquer avec un terminal (410) en utilisant au moins deux porteuses constituantes après une agrégation de porteuses, comprenant :
un dispositif d'envoi de signalisation d'instruction (401), configuré pour envoyer une signalisation d'instruction, la signalisation d'instruction étant utilisée pour instruire une porteuse constituante de liaison descendante (DLCC1) utilisée comme référence de cadencement pour une porteuse constituante de liaison montante (ULCC1, ULCC2) et
dans lequel la porteuse constituante de liaison descendante utilisée comme référence de cadencement est utilisée dans le processus du canal d'accès aléatoire initial.
